# EUROPÄISCHE PATENTSCHRIFT

(11) **EP 0 850 400 B1**
(45) Veröffentlichungstag und Bekanntmachung des Hinweises auf die Patenterteilung: **27.12.2000**
(21) Anmeldenummer: 97931721.1
(22) Anmeldetag: 09.07.1997
(51) Int. Cl.: G01L 1/26, B60T 8/52

(54) **ZUG-DRUCK-KRAFTWANDLER INSBESONDERE FÜR ELEKTROMECHANISCHE BREMSSYSTEME**
COMPRESSION-TENSION TRANSDUCER, ESPECIALLY FOR ELECTROMECHANICAL BRAKING SYSTEMS
TRANSDUCTEUR DE TRACTION-COMPRESSION, NOTAMMENT POUR SYSTEMES DE FREINAGE ELECTROMECANIQUES

(30) Priorität: 17.07.1996 DE 19628814
(43) Veröffentlichungstag der Anmeldung: 01.07.1998
(73) Patentinhaber: ROBERT BOSCH GMBH, 70442 Stuttgart (DE)
(72) Erfinder: SEILS, Wolfgang, D-71640 Ludwigsburg (DE); BLOSCH, Georg, D-71711 Murr (DE)
(86) Internationale Anmeldenummer: DE9701444
(87) Internationale Veröffentlichungsnummer: WO9803844

(56) Entgegenhaltungen:
- US-A- 3 399 564
- US-A- 5 279 394
- US-A- 5 410 911

## Beschreibung

### Stand der Technik

Die Erfindung betrifft einen Druckkraftsensor, insbesondere für die Erfassung und Regelung von Radbremskräften bei elektromechanischen Bremssystemen in Kraftfahrzeugen, nach dem Oberbegriff des Hauptanspruchs.

Bei einer aus der EP 0 566 133 B1 bekannten Bremsvorrichtung für Kraftfahrzeuge wird die nötige Bremskraft mittels einer hydraulischen Servoeinheit auf die Räder übertragen. In einem Hauptzylinder wird hier der durch das Niederdrücken des Bremspedals entstehende Zylinderdruck gemessen und dieser Meßwert als Steuersignal für eine hydraulische Steuereinrichtung zur Optimierung der Bremswirkung herangezogen. Aus der US-A-3 399 564 ist ein Zug-Druck-Kraftwandler mit C-stücken bekannt.

Insbesondere bei elektromechanischen Bremssystemen sind geeignete Regelgrößen zur Optimierung der Bremswirkung an jedem Rad individuell zu sensieren und können dann einer elektronischen Regeleinrichtung zugeführt werden. Bei Radbremskraft bzw. Radbremsmoment geregelten Bremssystemen ist es sinnvoll diese Radbremskräfte oder -momente möglichst direkt am Rad zu sensieren.

### Vorteile der Erfindung

Der Drucksensor der eingangs beschriebenen Art ist in der erfindungsgemäßen Weiterbildung mit den kennzeichnenden Merkmalen des Anspruchs 1 dadurch vorteilhaft, daß ein Drucksensor gefunden ist der zur Erfassung aller am gebremsten Rad übertragenen Bremsmomente herangezogen werden kann und ein geeignetes Signal zur Weiterverarbeitung in einer Bremsregeleinrichtung zur Verfügung stellt.

Es finden in vorteilhafter Weise magnetoelastische Drucksensoren Verwendung, die üblicherweise zur Sensierung von Druckkräften herangezogen werden, was beispielsweise zur Regelung von Kräften in der Bremszange des Bremssystems auch genügt. Gemäß der Erfindung wird auf einfache Weise vermieden, daß hier zwei Drucksensoren nötig sind, um eine Momentregelung für Vorwärts- und Rückwärtsfahrt zu ermöglichen. Das Problem der Krafteinleitung und der Nullpunktdrift bei Überlastung für wechselnde Belastungen, wie sie bei Vorwärts- und Rückwärtsfahrt mit Einsensorenkonzepten auftreten können, ist gemäß der Erfindung gelöst.

Besonders vorteilhaft ist somit eine Umwandlung von Zugund Druckkräften unter Beibehaltung der Druckkrafteinleitung beim erfindungsgemäßen Drucksensor möglich, wodurch eine Verwendung des Druckkraft-/Drucksensors zur Sensierung von wechselnden Zug- und Druckkräften auch für allgemeine Kraftsensierungszwecke einsetzbar ist.

Eine Regelung des Radbremsmoments kann auf einfache Weise durch Sensieren der Abstützkraft in der mechanischen Bremvorrichtung an einer Zug- und Druckkräfte übertragenden Momentenstütze durchgeführt werden, wobei die Radbremse gelenkig gelagert ist und sich gegen diese Momentstütze abstützt. Eine Regelung des Bremsmoments in elektronisch geregelten Bremssystemen mit wechselnder Lastrichtung ist unter Verwendung des Ausgangssignals des Drucksensors mit nur einem Druckkraftsensor für beide Richtungen möglich.

Ebenfalls vorteilhafte Ausführungsformen sind in den weiteren Unteransprüchen angegeben.

### Zeichnung

Ein Ausführungsbeispiel eines erfindungsgemäßen Drucksensors wird anhand der Zeichnung erläutert. Es zeigen:
Figur 1 eine Darstellung der Einzelteile des Drucksensors und
Figur 2 den zusammengebauten funktionsfähigen Drucksensor.

### Beschreibung des Ausführungsbeispiels

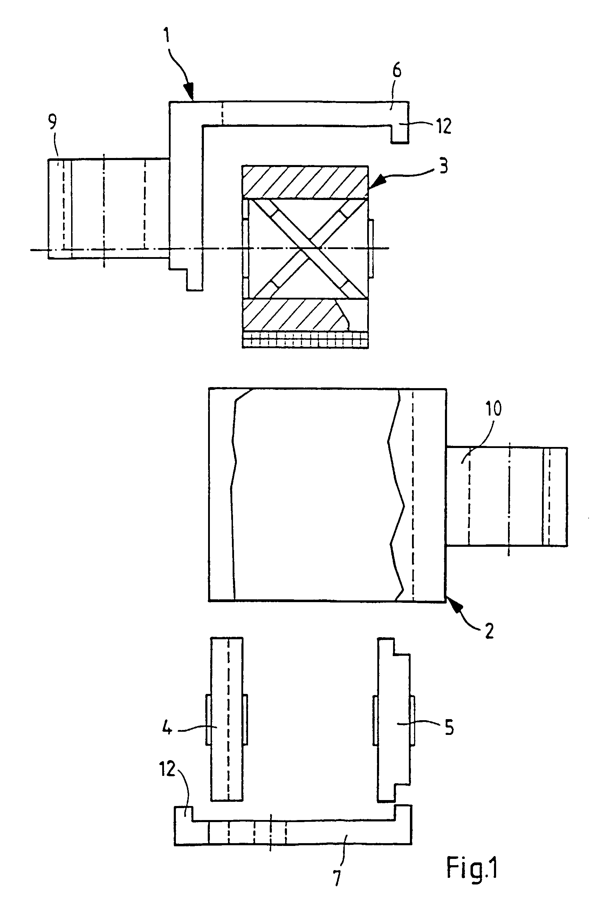

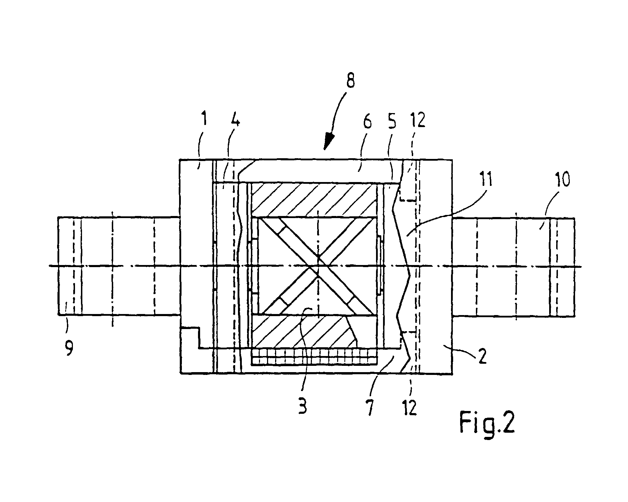

In Figur 1 sind Einzelteile eines Drucksensors gezeigt, der einen noch nicht fertig montierten Gabelarm 1 (siehe Seitenansicht oben) und einen Gabelarm 2 (siehe Draufsicht in der Mitte) aufweist. Weiterhin ist ein Kraftsensormodul 3 und jeweils ein Druckstück 4 und 5 gezeigt. Der Gabelarm 1 hat ein festmontiertes Gabelende 6 (siehe oben) und ein beim Abschluß der Montage anfügbares Gabelende 7. Zur Erläuterung der Funktion des Drucksensors wird auch auf Figur 2 verwiesen, die den fertig montierten Drucksensor 8 zeigt.

An den Gabelarmen 1 und 2 befinden sich gegenüberliegende Anschlußstutzen 9 und 10, an denen die zu sensierende Zug- oder Druckkraft angreift. Ein möglicher Einsatz des Drucksensors zur Erfassung von Bremskräften an Kraftfahrzeugrädern ist dem Stand der Technik EP 0 566 133 B1 (Figur 1) zu entnehmen, bei dem ein Drucksensor in einer hydraulischen Servoeinheit untergebracht ist und die Druckkräfte zwischen der Radbremse und einer Momentenstütze erfaßt werden.

Das würfelförmige magnetoelastische Kraftsensormodul 3 wird gemäß der Figur 2 von den zwei Gabelarmen 1 und 2, die jeweils um 90° gegeneinander verdreht sind, umschlossen. Die Gabelenden 6 und 7, sowie das Gabelende 11 und das nicht sichtbare Gabelende des Gabelarms 2 greifen dabei über Abwinklungen 12 in jeweils eines der Druckstücke 4 und 5 so ein, daß auch Zugkräfte über die Druckstücke 4 und 5 als Druckkräfte in das Kraftsensormodul 3 eingeleitet werden.

Bei einer Druckbeaufschlagung auf die Anschlußstücke 9 und 10 wird somit die Druckkraft über die Druckstücke 4 und 5 direkt an den Fußpunkten der Gabelarme 1 und 2 auf das Kraftsensormodul 3 übertragen. Bei einer Zugbelastung der Anschlußstücke 1 und 2 übertragen die Abwinklungen 12 der Gabelenden die Kraft auf das Kraftsensormodul 3 und es kann in gleicher Weise ein Ausgangssignal erzeugt werden. Solange nur Zugkräfte auftreten, könnten die Druckstücke 4 und 5 auch fest mit den Gabelarmen 1 und 2 verbunden sein.

Bei einem Wechsel der Druckrichtung müssen alle Kräfte auf das Kraftsensormodul 3 erfaßt werden. Dazu ist es erforderlich, daß diese Druckstücke 4 und 5 entkoppelbar in der Druckrichtung sind und somit die Druckstücke 4 und 5 einerseits direkt am Fußpunkt der Gabelarme 1 und 2 anliegen, andererseits an der Krafteinleitungsfläche des Kraftsensormoduls 3.

Der eine Gabelarm 1 ist zur besseren Montierbarkeit im Bereich einer Kontaktzone mit dem Kraftsensormodul 3 geteilt und weist, wie oben beschrieben, ein separates Gabelende 7 auf, das so angebracht ist, daß auch trotz Störkonturen z.B. für Kabeldurchführungen für das Kraftsensormodul 3 etc. eine Montage ermöglicht wird.

In einer hier nicht dargestellten Ausführungsform kann beispielsweise der Gabelarm 1 auch mit dem Druckstück 4 eine Einheit bilden, wobei die notwendige Entkopplung durch eine lose Ankopplung des Gabelarms 1 an den Anschlußstutzen 9 realisiert werden kann.

Ferner ist es möglich in Umkehrung des Prinzips der Kraftumlenkung die Druckstücke 4 und 5 gabelförmig auszuführen und statt dessen entsprechend einfachere Anschlußstutzen 9 und 10 zu verwenden.

Der Aufbau des Kraftsensormoduls 3 kann in einer herkömmlichen Technik erfolgen, beispielsweise wie beschrieben mit einem magnetoelastischen Modul, bei dem geringfügige Änderungen der mechanischen Kontur durch Druckbeaufschlagung zu einer Änderung der magnetischen Eigenschaften führt und diese Änderung elektronisch auswertbar ist. Auch ein Aufbau mit Dehnungsmeßstreifen, die bei mechanischer Beanspruchung eine elektrische Widerstandsänderung erfahren sind hier anwendbar ohne das Prinzip der Erfindung zu verlassen. Auch andere zur Druckkraftsensierung geeignete Elemente, die eine Veränderung ihrer elektrischen Eigenschaften bei mechanischer Beanspruchung erfahren, sind hier anwendbar.

## Patentansprüche

1. Druckkraftsensor, mit
- zwei sich gegenüberliegenden Anschlußstutzen (9,10) zur Krafteinleitung auf ein innenliegendes Kraftsensormodul, das ein von der äußeren Druckkraft abhängiges Ausgangssignal abgibt, **dadurch gekennzeichnet, daß**
- an jedem Anschlußstutzen (9,10) ein Gabelarm (1,2) angebracht ist, deren zwei Gabelenden den Kraftsensormodul (3) jeweils um 90° versetzt umgreifen und daß
- zwischen dem jeweiligen Fußpunkt der Gabelarme (1,2) und der Krafteinleitungsfläche des Kraftsensormoduls (3) Druckstücke (4,5) liegen, die seitlich auch von Abwinklungen (12) der Gabelenden umfaßt werden, so daß sowohl Druck- als auch Zugkräfte von den Anschlußstutzen (9,10) an die Krafteinleitungsfläche des Kraftsensormoduls weiterleitbar sind.

2. Druckkraftsensor nach Anspruch 1, **dadurch gekennzeichnet, daß**
- mindestens ein Gabelarm (1) zweiteilig ist, wobei eines der Gabelenden (7) des jeweiligen Gabelarms (1) an diesen Gabelarm (1) nach der Montage des Druckkraftsensors anfügbar ist.

3. Druckkraftsensor nach Anspruch 2, **dadurch gekennzeichnet, daß**
- das abnehmbare Gabelende (7) mit einem der Druckstücke (4) einstückig ist, wobei der diesem Gabelarm (1) zugeordnete Anschlußstutzen (9) lose an dem Gabelarm (1) gehalten ist.

4. Druckkraftsensor nach Anspruch 1, **dadurch gekennzeichnet, daß**
- die Gabelarme (1,2) mit den jeweiligen Druckstücken (4,5) einstückig sind, wobei die diesen Gabelarmen (1,2) zugeordneten Anschlußstutzen (9,10) lose an dem jeweiligen Gabelarm (1,2) gehalten sind.

5. Druckkraftsensor nach einem der vorherigen Ansprüche, **dadurch gekennzeichnet, daß**
- das Kraftsensormodul (3) ein magnetoelastischer Kraftsensor ist.

## Claims

1. Pressure force sensor having
- two opposite connecting branches (9, 10) for the application of force to an internal force sensor module which outputs an output signal as a function of the external compressive force, characterized in that
- a fork arm (1, 2) is attached to each connecting branch (9, 10), the two fork ends of which arm engage around the force sensor module (3) offset in each case by 90°, and in that
- thrust pieces (4, 5) are situated between the respective base end of the fork arms (1, 2) and the force application surface of the force sensor module (3), which thrust pieces are also laterally surrounded by front portions (12) of the fork ends, so that both compressive and tensile forces can be passed on by the connecting branches (9, 10) to the force application surface of the force sensor module.

2. Pressure force sensor according to Claim 1, characterized in that
- at least one fork arm (1) is in two parts, it being possible for one of the fork ends (7) of the particular fork arm (1) to be joined to this fork arm (1) after installation of the pressure force sensor.

3. Pressure force sensor according to Claim 2, characterized in that
- the removable fork end (7) is integral with one of the thrust pieces (4), the connecting branch (9) which is assigned to this fork arm (1) being held loosely on the fork arm (1).

4. Pressure force sensor according to Claim 1, characterized in that
- the fork arms (1, 2) are integral with the respective thrust pieces (4, 5), the connecting branches (9, 10) which are assigned to these fork arms (1, 2) being held loosely on the respective fork arm (1, 2).

5. Pressure force sensor according to one of the previous claims, characterized in that
- the force sensor module (3) is a magnetoelastic force sensor.

## Revendications

1. Capteur de poussée comprenant deux appuis de raccordement (9, 10) opposés pour induire les efforts dans un module de capteur de force, situé à l'intérieur, qui fournit un signal de sortie dépendant de la force de poussée extérieure,
caractérisé en ce que
• chaque appui de raccordement (9, 10) est muni d'un bras de fourche (1, 2) dont les deux extrémités entourent de manière décalée de 90°, le module capteur de force (3) et,
• entre le talon respectif des bras de fourche (1, 2) et la surface d'induction de force du module capteur de force (3), on a des pièces de poussée (4, 5) qui sont également entourées latéralement par les parties coudées (12) des extrémités de fourche pour permettre de transmettre à la fois des efforts de compression et des efforts de traction par les appuis (9, 10) aux surfaces induisant les forces dans le module capteur de force.

2. Capteur de poussée selon la revendication 1,
caractérisé en ce que
au moins un bras de fourche (1) est en deux parties et l'une des extrémités de fourche (7) du bras de fourche (1), respectif, est montée sur ce bras (1) après l'installation du capteur de force.

3. Capteur de poussée selon la revendication 2,
caractérisé en ce que
l'extrémité de fourche (7), amovible est réalisée en une seule pièce avec la pièce de poussée (4), et l'appui de raccordement (9) associé à ce bras (1) de fourche est tenu librement sur ce bras de fourche (1).

4. Capteur de poussée selon la revendication 1,
caractérisé en ce que
les bras de fourche (1, 2) font corps avec des pièces de poussée (4, 5) respectives et les appuis de raccordement (9, 10) associés à ces bras de fourche (1, 2) sont tenus librement sur le bras de fourche respectif (1, 2).

5. Capteur de poussée selon l'une quelconque des revendications précédentes,
caractérisé en ce que
le module de capteur de force (3) est un capteur de force-magnétoélastique.
